# EUROPEAN PATENT APPLICATION

(11) **EP 4 645 241 A1**
(43) Date of publication of application: **05.11.2025**
(21) Application number: 22969421.1
(22) Date of filing: 27.12.2022
(51) Int. Cl.: G06T 19/00

(54) **INFORMATION PROCESSING DEVICE, TERMINAL, AND INFORMATION PROCESSING METHOD**

(71) Applicant: Nissan Motor Co., Ltd., Kanagawa 221-0023 (JP)
(72) Inventor: SAITO, Tadashi, Atsugi-shi, Kanagawa 243-0123 (JP); FUJITA, Akira, Atsugi-shi, Kanagawa 243-0123 (JP); HATTA, Hiroki, Atsugi-shi, Kanagawa 243-0123 (JP)
(74) Representative: Global IP Europe Patentanwaltskanzlei
(86) International application number: PCT/JP2022/048342
(87) International publication number: WO 2024/142300

(57) **Abstract**

In an information processing device (14) including a controller (140) for transmitting information to an output device (12), the controller (140) acquires information indicating a selected connector selected by a user from among connectors connected to wiring included in an target object, generates a selected component image which highlights the selected connector and another component associated with the selected connector, and transmits to the output device the selected component image to be displayed such that the selected component image is superimposed on the target object.

## Description

### Technical Field

The present invention relates to an information processing device, a terminal, and an information processing method.

### Background Art

There is known a technology by which a component image is displayed on a display that is visible to a user in a state where the component image is superimposed on a vehicle, and when a component is selected from a component configuration diagram displayed together with the component image, the component is highlighted in the component image.

### Prior Art Document

### Patent Document

Patent Document 1: JP2021-182211A

### Summary of Invention

### Problems to Be Solved by Invention

However, according to the technology described in Patent Document 1, when a worker inspects a connector included in a wire harness, it is difficult to locate another connector to which the connector is to be connected and wiring connected to each pin of the connector, for example. This causes a problem of taking time to check information necessary for inspecting the connector, which leads to a decrease in the efficiency of work such as inspection.

A problem to be solved by the present invention is to provide an information processing device, a terminal, and an information processing method that improve the efficiency of work such as inspection of a connector.

### Means for Solving Problems

The present invention solves the above problem by acquiring information indicating a selected connector selected by a user from among connectors connected to wiring included in a target object, generating a selected component image which highlights the selected connector and another component associated with the selected connector, and transmitting to an output device the selected component image to be displayed such that the selected component image is superimposed on the target object.

The present invention solves the above problem by transmitting information indicating a selected connector selected by a user from among connectors connected to wiring included in a target object to an information processing device, receiving a selected component image from the information processing device, and displaying the selected component image such that the selected component image is superimposed on the target object, the selected component image being an image which highlights the selected connector and another component associated with the selected connector.

### Effects of Invention

According to the present invention, it is possible to improve the efficiency of work such as inspection of a connector.

### Brief Description of Drawings

FIG. 1 is a configuration diagram illustrating an example of an information processing system including an information processing device according to a first embodiment.
FIG. 2 illustrates an example of a screen displayed on a display of a terminal in the first embodiment.
FIG. 3 illustrates an example of a screen displayed on the display of the terminal when a user selects a connector in the first embodiment.
FIG. 4A illustrates an example of a connector information image of a selected connector displayed on the display of the terminal in the first embodiment.
FIG. 4B illustrates an example of a connector information image of an associated connector displayed on the display of the terminal in the first embodiment.
FIG. 5 is a flowchart illustrating an example of a control procedure for an information processing method executed by the information processing device according to the first embodiment.
FIG. 6 is a configuration diagram illustrating an example of an information processing system including an information processing device according to a second embodiment.

### Modes for Carrying out the Invention

### <<First Embodiment>>

Hereinafter, an embodiment of an information processing device and an information processing method according to the present invention will be described with reference to the drawings. In a first embodiment, an information processing device installed in a terminal owned by a user will be taken as an example.

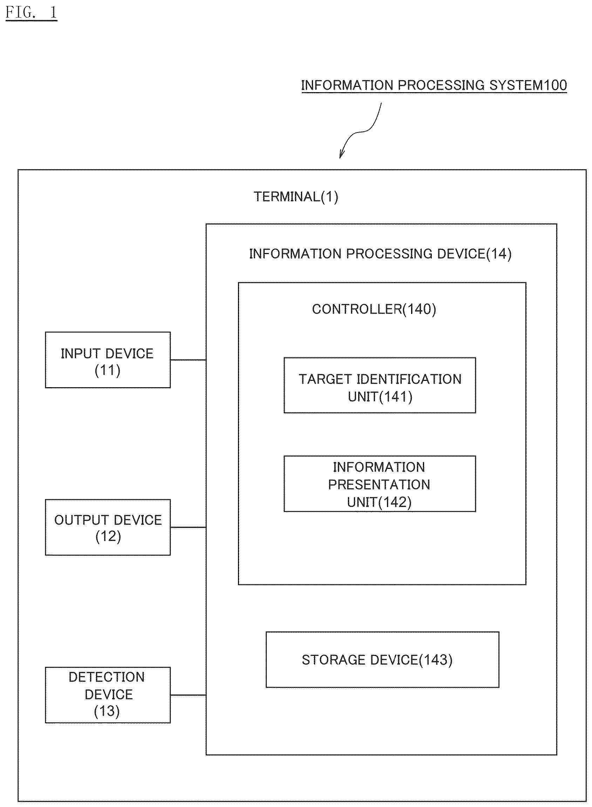

FIG. 1 is a block diagram illustrating an example of an information processing system 100 including an information processing device 14 according to the first embodiment. The information processing system 100 of the present embodiment is a system that presents information on components included in a target object via a terminal 1 when the user performs work such as inspection and repair (hereinafter, referred to as inspection and the like) of the target object. The information processing system of the present embodiment provides a service that presents information that is easy for the user to intuitively understand, using an augmented reality (AR) technology. The target object to be subjected to inspection and the like is a vehicle, for example. The following describes an example in which the target object is a vehicle and information on components required for vehicle inspection and the like is presented. However, the target object is not limited to a vehicle, and may be a train, an airplane, or a home appliance, for example.

With regard to the AR technology, there have been conventionally known a video see-through method for achieving augmented reality using a non-transmissive display device and a see-through method for achieving augmented reality using a transmissive display device. In the present embodiment, as the video see-through method, an example is described in which the information processing device 14 causes an output device 12 of the terminal 1 to display a virtual image such that the virtual image is superimposed on a real space or a captured image of the real space. The virtual image is an image of a virtual space that does not exist in the real space. The virtual image is what is called a computer graphic, and is an image of a two-dimensional model or an image of a three-dimensional model. As the terminal 1, a smartphone, a mobile phone, a tablet terminal, a portable computer, or the like can be used. The terminal 1 may be smart glasses that are a glasses-type terminal the user can wear on his/her head.

As illustrated in FIG. 1, in the information processing system 100 of the present embodiment, the terminal 1 includes an input device 11, the output device 12, a detection device 13, and the information processing device 14. These devices exchange information with each other by wire or wirelessly. The information processing device 14 acquires various types of information from the input device 11 and the detection device 13, and provides information on components to the user via the output device 12.

The information processing device 14 presents an augmented reality (AR) space to the user via the output device 12. The augmented reality space is a space that is constructed based on real space information and virtual space information. Specifically, the augmented reality space is a space in which the real space is visually augmented by displaying the virtual image on a display (equivalent to the output device 12) such that the virtual image is superimposed on the real space or the captured image of the real space.

In the present embodiment, when the user starts a vehicle inspection application on the terminal 1, the output device 12 functions as a non-transmissive display device. An image of surrounding scenery captured by the detection device 13 is output to the information processing device 14. Then, when the processing in the information processing device 14 described later is completed and information of a superimposed image including the captured image and the virtual image is input from the information processing device 14 to the output device 12, the superimposed image is displayed on the output device 12. The superimposed image is an image in which the virtual image is superimposed on an image of scenery that reflects the real space. The user feels as if the virtual image is superimposed on the real space via the output device 12. The video see-through augmented reality allows the user to recognize the real space and information shown by the virtual image.

The input device 11 is a device that inputs information, and is operated by the user. The input device 11 is used to perform various operations, such as starting a vehicle inspection application, selecting information to be presented to the user, and making a decision by the user. The input device 11, for example, may be a device that allows input by the user's manual operation, such as a touch panel arranged on the display, buttons arranged on a keyboard, or a joystick, or may be a device that allows input by the user's utterance, such as a microphone. The information input by the user through the input device 11 is output to the information processing device 14. The input information is identification information of a vehicle the user wants to inspect and the like, inspection area information indicating an inspection target area in the vehicle, and information indicating a connector selected by the user, for example.

The output device 12 is a device that outputs information to the user, and is used to display information on a screen or to provide guidance by voice, for example. The output device 12 receives information transmitted from the information processing device 14. When receiving information from the information processing device 14, or when receiving a control command to display information from the information processing device 14, the output device 12 outputs the information received from the information processing device 14 to the user. The output device 12 includes a device that can output an image or video that acts on the user's vision, such as a display. The output device 12 may also include a device that can output a sound that acts on the user's hearing, such as a speaker.

Examples of the display include a transmissive display and a non-transmissive display. In the case of the transmissive display, a video image behind the display is visible through it, so that the user can directly visually recognize the video image, that is, an image generated by the refraction and reflection of light rays. In the case of the non-transmissive display, the user visually recognizes a captured image of the real space displayed on the display, that is, an image reproduced by an electrical conversion.

In the present embodiment, the output device 12 is described as a non-transmissive display. For example, when receiving a vehicle component image from the information processing device 14, the output device 12 displays the vehicle component image such that the vehicle component image is superimposed on a captured image of the vehicle. The vehicle component image will be described later. In the case where the output device 12 is a transmissive display, when receiving a vehicle component image from the information processing device 14, the output device 12 displays the vehicle component image such that the vehicle component image is superimposed on the real space including the vehicle.

The detection device 13 includes a device that can capture an image of the surroundings of the terminal 1, for example. The detection device 13 includes, for example, a camera having an image sensor, such as a CCD. When the user starts a vehicle inspection application on the terminal 1, the detection device 13 captures still images and moving images. The detection device 13 is provided at a predetermined position in the terminal 1, and captures an image in a direction in which a lens is oriented. For example, the detection device 13 is provided at the front part of the terminal 1. In the present embodiment, the detection device 13 can capture at least any one of still images and moving images. The images captured by the detection device 13 are output to the information processing device 14 as image information at predetermined intervals. In the present embodiment, after the user starts the vehicle inspection application, a camera lens is aimed at the vehicle to be subjected to inspection and the like, and the detection device 13 captures an image of the real space including the vehicle. The detection device 13 may have an image stabilization function.

The detection device 13 may also detect the illuminance in the real space around the terminal 1. The detection device 13 may be composed of an illuminometer, or may be configured to obtain brightness information from image information of the camera.

The information processing device 14 of the present embodiment is composed of a computer equipped with hardware and software, and includes a ROM that stores programs, a CPU that executes the programs stored in the ROM, and a RAM that functions as an accessible storage device. A controller 140 illustrated in FIG. 1 is equivalent to the CPU, and a storage device 143 illustrated in FIG. 1 is equivalent to the ROM and the RAM.

The controller 140 according to the present embodiment transmits information to the output device 12. For example, the controller 140 transmits an image to be displayed on the output device 12 and a control command to display the image. As illustrated in FIG. 1, the controller 140 includes, as functional blocks, an target identification unit 141 and an information presentation unit 142. These blocks achieve their respective functions described below by software established in the ROM. In the present embodiment, the controller 140 may transmit only an image to be displayed on the output device 12 without transmitting a control command.

First, the function of the target identification unit 141 will be described. The target identification unit 141 acquires a captured image from the detection device 13. The target identification unit 141 executes image recognition processing on the acquired captured image, and determines whether the captured image includes the whole or a part of a vehicle. Accordingly, the target identification unit 141 can acquire a captured image which includes at least a part of the vehicle. In the present embodiment, the captured image is described as a moving image, but the captured image may be a still image.

The target identification unit 141 acquires vehicle identification information input by the user, and identifies the type of the vehicle to be subjected to inspection and the like, based on the vehicle identification information. The type of the vehicle is the corresponding model of the vehicle, for example. The vehicle identification information is a vehicle identification number (VIN), for example. The target identification unit 141 may extract the features of the corresponding model of the vehicle by performing the image recognition processing on the acquired captured image of the vehicle, and identify the corresponding model of the vehicle.

The target identification unit 141 also identifies a display target component among components included in the vehicle in the captured image, based on the information acquired from the input device 11 and the detection device 13. The display target component is a component whose virtual image is to be displayed in a superimposed manner. Examples of the display target component include electronic parts, wiring connecting the electronic parts, and connectors connecting the electronic parts and the wiring. The electronic parts are parts related to control units, such as an IPDM, a fuse box, an ECM, and a BCM. The wiring is composed of electric wires that connect the electronic parts. The wiring may be a harness that bundles a plurality of electric wires, or may be each electric wire included in the harness. That is, in the present embodiment, a virtual image corresponding to the display target component is displayed on the display (equivalent to the output device 12).

The target identification unit 141 first acquires from the input device 11 inspection area information indicating an inspection target area input by the user. The inspection target area is an inspection area of the vehicle the user wants to inspect. The inspection area is an area representing a part of the vehicle, such as an engine compartment, a body harness, a door harness, a front door, a rear door, and a dashboard. In the present embodiment, the inspection area of the vehicle is set in advance, and the information on the inspection area is stored in the storage device 143. The information on the inspection area includes information on the vehicle components included in the inspection area. The component information includes information on the types, positions, and images of the components. For example, when the inspection area is an engine compartment, the information on the inspection area includes information on components such as connectors, wiring, and electronic parts included in the engine compartment. In the present embodiment, when a selection image for selecting an inspection area is displayed on the output device 12, the user selects an inspection target area the user wants to inspect and the like from the displayed selection image, and inputs inspection area information indicating the selected inspection target area. For example, in the selection image for selecting an inspection area, a plurality of inspection areas are displayed in a selectable form such as a pull-down menu. The user inputs the inspection area information by touching the inspection area the user wants to inspect and the like among the inspection areas included in the displayed selection image.

Upon acquiring the inspection area information, the target identification unit 141 recognizes the inspection target area indicated by the inspection area information in the image captured by the detection device 13. For example, the target identification unit 141 acquires a reference shape corresponding to the inspection target area indicated by the inspection area information from the storage device 143, and determines whether there is a shape corresponding to the reference shape in the captured image. The reference shape is a shape that is set in advance for each inspection target area, and is the external shape of each part of the vehicle. For example, when the inspection target area is an engine compartment, the reference shape is the external shape of the inside of the engine compartment. Also, when the inspection target area is a door harness, the reference shape is the external shape of the door. The storage device 143 stores the reference shapes set for individual inspection target areas.

When there is a shape corresponding to the reference shape of the inspection target area in the captured image, the target identification unit 141 recognizes the position of the shape as the inspection target area. The target identification unit 141 identifies a component included in the recognized inspection target area as a display target component. For example, when there is a shape corresponding to the reference shape of the engine compartment in the captured image, the target identification unit 141 recognizes the position of the shape as the engine compartment included in the captured image, and identifies a component included in the engine compartment as a display target component. Also, the target identification unit 141 may identify the display target component by performing the image recognition processing on the image captured by the detection device 13. That is, the target identification unit 141 may identify the display target component from the captured image without input of the inspection area information by the user.

As described above, in the present embodiment, when the user points the camera of the detection device 13 toward the inspection area the user wants to inspect and the like, the target identification unit **141** recognizes the inspection target area in the image captured by the detection device 13, and identifies the component included in the inspection target area as a display target component.

In the present embodiment, the inspection area may be expressed in a multi-stage hierarchical structure. For example, the inspection area is expressed by major items and minor items. The minor items are items that express areas limited more than areas expressed by the major items. For example, a harness included in an engine compartment is further divided into several parts. Therefore, when the engine compartment is set as a major item of the inspection area, each part of the harness included in the engine compartment is set as a minor item of the inspection area. After selecting a major item of the inspection area, the user selects an inspection target area from among minor items included in the major item.

In the present embodiment, vehicle information for each type of the vehicle is stored in the storage device 143. The vehicle information includes information on each component included in the vehicle, information on the inspection area set in the vehicle, and information on the reference shape corresponding to the inspection area. Upon identifying the type of the vehicle, the target identification unit 141 acquires the vehicle information stored for the identified vehicle type from the storage device 143.

Each component of the vehicle may have a plurality of variations. For example, some components have different grades, options, and the like. The storage device 143 stores information on different types of components for the information on each component for each type of the vehicle. When the display target component includes a plurality of components of different types, the target identification unit 141 may identify the type of the display target component. For example, the target identification unit 141 may perform the image recognition processing on the captured image to recognize the type of the component. When the type of the component cannot be recognized from the captured image, the target identification unit 141 may acquire information indicating the type of the component selected by the user.

Even when the vehicle is a vehicle that has an external shape partly different from that of the corresponding vehicle model acquired from the storage device 143, such as a damaged vehicle or a modified vehicle, the target identification unit 141 may identify the display target component from the captured image including the vehicle excluding a damaged or modified part. When an obstacle is present in front of the vehicle, the target identification unit 141 may identify the display target component from the captured image including the vehicle excluding a part hidden by the obstacle. Further, even when the vehicle has an interior component and/or an exterior component removed therefrom, the target identification unit 141 may identify the display target component from the captured image including the vehicle excluding the removed interior component and/or exterior component. Examples of the interior component include a door finisher, an instrument panel assembly, a seat, a center console, and floor trim. Examples of the exterior component include a lamp, a grille, a FR bumper, and a RR bumper.

The target identification unit 141 may control the detection device 13 to capture an image while adjusting the amount of light taken in according to the illuminance of the real space detected by the detection device 13. For example, the target identification unit 141 controls the detection device 13 to capture an image of the real space while taking in a larger amount of light as the real space is darker. The target identification unit 141 also controls the detection device 13 to capture an image of the real space while taking in a smaller amount of light as the real space is brighter. Accordingly, whether the real space is dark or bright, the target identification unit 141 can recognize the vehicle component based on the captured image.

Next, the function of the information presentation unit 142 will be described. The information presentation unit 142 controls the output device 12 to display the component image related to the display target component to the user. That is, the information presentation unit 142 transmits the component image and a control command to display the component image to the output device 12. The component image is a virtual image showing each component of the vehicle. For example, the component image includes a component image showing an electronic part, a component image showing wiring, and a component image showing a connector. The component image is an image of a two-dimensional model or an image of a three-dimensional model that is what is called a computer graphic. The component image is acquired from the storage device 143. In the present embodiment, the information presentation unit 142 controls the output device 12, but is not limited to this. The information presentation unit 142 may only transmit the component image to the output device 12 without a function of controlling the output device 12.

In the present embodiment, when a display target component is identified, the information presentation unit 142 acquires a component image corresponding to the display target component as a reference component image from the storage device 143, and causes the output device 12 to display the reference component image such that the reference component image is superimposed on the vehicle. That is, the information presentation unit 142 transmits to the output device 12 the reference component image and a control command to display the reference component image such that the reference component image is superimposed on the vehicle. For example, the information presentation unit 142 generates a superimposed image in which the reference component image is superimposed on a captured image of the vehicle included in the real space, and causes the output device 12 to display the superimposed image. The reference component image is superimposed on the position of the display target component of the vehicle in the captured image. In the present embodiment, a non-transmissive display is taken as an example, but the reference component image may be displayed on a transmissive display. In this case, the reference component image is displayed at a position on the display corresponding to the position of the display target component of the vehicle included in the real space. The user can directly visually recognize, via the display, the augmented reality space including the vehicle with the reference component image being superimposed thereon. The reference component image is not an essential element, and may be used as appropriate if necessary. The information presentation unit 142 may transmit only the reference component image to be displayed such that the reference component image is superimposed on the vehicle to the output device 12, without transmitting a control command.

In the present embodiment, the information presentation unit 142 acquires component information on connectors, wiring, and electronic parts as the display target components. The information presentation unit 142 causes the output device 12 to display, as a reference component image, a component image showing the connectors, wiring, and electronic parts. The information presentation unit 142 also acquires component information on an electronic part with a fuse among the electronic parts included in the vehicle, and causes the output device 12 to display the reference component image showing the electronic part such that the reference component image showing the electronic part is superimposed on the vehicle, based on the component information. The information presentation unit 142 may transmit the reference component image showing the electronic part to be displayed such that the reference component image is superimposed on the vehicle to the output device 12, without transmitting a control command.

The reference component image may be a component image expressed in a different color for each type of the component. For example, the reference component image showing the connector is an image in which the connector is expressed in a color different from the color of the reference component image showing the electronic part and the color of the reference component image showing the wiring, and is an image in which the connector is expressed in blue, for example. The reference component image showing the wiring is an image in which the wiring is expressed in green, for example. The reference component image showing the electronic part is an image in which the electronic part is expressed in orange, for example.

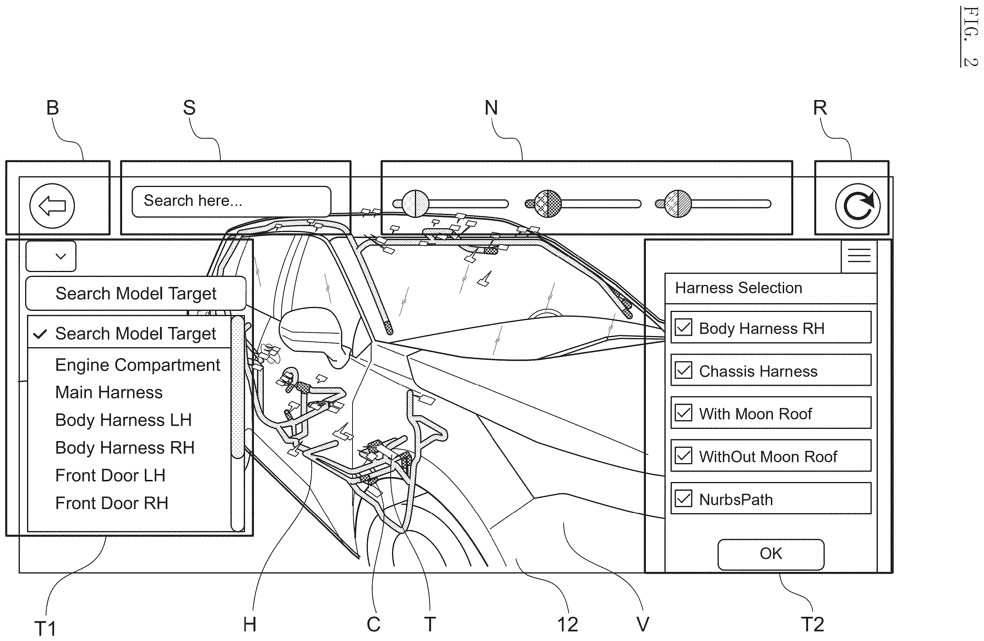

Here, an example of a screen on which reference component images are displayed such that the reference component images are superimposed on the vehicle will be described with reference to FIG. 2. FIG. 2 illustrates an example of a screen displayed on the display of the terminal by the information processing device according to the present embodiment. Hereinafter, the output device 12 will be described as a display. As illustrated in FIG. 2, the information processing device 14 displays on the display (equivalent to the output device 12) a screen in which a reference component image C showing a connector and a reference component image H showing wiring are superimposed on a captured image of a vehicle V.

In the present embodiment, the reference component image showing a connector includes an identification tag image for identifying the connector. The identification tag image includes an identification number for identifying the connector. The identification tag image is an image in which the identification number is expressed in red letters on a white background, for example. In the example of FIG. 2, around the reference component image C showing the connector, an identification tag image T including the identification number of the connector is displayed on the display such that the identification tag image T is superimposed on the vehicle V. That is, the identification tag image is displayed around the reference component image of the corresponding connector. That is, the identification tag image is displayed at a position where the corresponding connector can be identified. In addition, the identification tag image is displayed such that the identification number is oriented in the direction of the user. For example, even when the user moves around the vehicle, the identification number included in the identification tag image is displayed such that the identification number is oriented in the direction of the terminal 1 based on the position of the terminal 1 operated by the user. The orientation of the identification number included in the identification tag image may be adjusted in the up-down direction. When the position of the identification tag image is higher than the position of the terminal 1, for example, when the identification tag image corresponding to a connector mounted on a roof is at a position on the roof, the orientation of the identification tag image is adjusted in the up-down direction, and the identification tag image is displayed such that the identification tag image is oriented in the direction of the terminal 1. The identification tag image of the connector is displayed in an opaque state regardless of the highlighting degree setting by the user. The setting of the highlighting degree will be described later.

The screen displayed on the output device 12 may include an image showing an input unit for the user to input various types of operation information. In the example of FIG. 2, displayed on the output device 12 are an image B of a previous screen button for giving instructions to return to the previous screen, an image R of a reset button for updating the display of the component image on the screen to the initial state, selection images T1 and T2 for selecting the inspection target area, an image S of a search bar for searching for a connector, and an image N of an highlighting degree slide bar for adjusting the highlighting degree of the reference component image displayed on the output device 12. When the user touches the image B of the previous screen button on the display, the information processing device 14 displays the image of the previous screen on the output device 12. When the user touches the image R of the reset button on the display, the information processing device 14 stops the display of the component image and resumes recognition processing of the display target component. The images T1 and T2 show the names of items in the inspection target area in a pull-down menu. The image T1 is a selection image for selecting a major item in the inspection target area. The image T2 is a selection image for selecting a minor item in the inspection target area. When the user operates a scroll bar shown in the images T1 and T2 on the display to touch an item name of an inspection target area, the information processing device 14 obtains inspection area information indicating the touched inspection target area.

When the user selects the search bar image S and inputs a keyword, the information presentation unit 142 may display a reference component image showing a connector based on the input keyword. The user touches the search bar image S on the output device 12 and inputs a keyword for searching for a connector. Accordingly, a reference component image showing the connector corresponding to the input keyword is displayed. In the present embodiment, while the application is running, the search bar image S is displayed on the output device 12 even when the screen is changed. In the search for a connector, the connector name and/or the connector number of the connector are search targets. Also, in the search for a connector, when a keyword input in the search bar completely matches the connector name or the connector number, the information presentation unit 142 may display a reference component image of the connector corresponding to the completely matched connector name or connector number, or when the keyword input in the search bar partially matches the connector name or the connector number, the information presentation unit 142 may display a reference component image of the connector corresponding to the partially matched connector name or connector number.

When a connector included in the inspection target area selected by the user is searched for, the information presentation unit 142 may display a reference component image showing the connector. When a connector not included in the inspection target area selected by the user is searched for, the information presentation unit 142 may display a connector information image including connector information of the connector without displaying a reference component image showing the connector.

The information presentation unit 142 may change the highlighting degree of a reference component image based on the user's operation of the highlighting degree slide bar, and display the reference component image based on the changed highlighting degree. The user adjusts the value of the highlighting degree of the reference component image by operating a slider on the highlighting degree slide bar. When the value of the highlighting degree is 0, the highlighting degree indicates that the reference component image is transparent, that is, hidden. When the value of the highlighting degree is 100, the highlighting degree indicates that the reference component image is opaque. When the value of the highlighting degree is between 0 and 100, the highlighting degree indicates that the reference component image is translucent. The highlighting degree of the reference component image is set for each type of the component. That is, the highlighting degree slide bar is displayed on the screen for each type of the component. The screen illustrated in FIG. 2 includes an image of three highlighting degree slide bars for adjusting the highlighting degrees of the wiring, the connector, and the electronic part. In the initial setting, the highlighting degrees of the reference component images showing the connector, the wiring, and the electronic part are set to 100.

In the present embodiment, when the user performs an operation of setting the highlighting degree of the reference component image showing the wiring, the information presentation unit 142 may change to the set highlighting degree the highlighting degree of the reference component image showing the wiring other than target wiring connecting a selected connector and an associated connector. The selected connector and the associated connector will be described later.

The information presentation unit 142 may adjust the highlighting degree of the reference component image according to the illuminance of the real space detected by the detection device 13. For example, as the real space is brighter, the information presentation unit 142 sets the highlighting degree of the reference component image to a higher value, and as the real space is darker, the information presentation unit 142 sets the highlighting degree of the reference component image to a lower value. Accordingly, the highlighting degree can be adjusted such that the reference component image is easily visible whether the real space is bright or dark.

The information presentation unit 142 displays the reference component image within three seconds after the identification of the display target component. When it takes three seconds or more to display the reference component image after the identification of the display target component, the information presentation unit 142 may display an image indicating that the display of the reference component image is in preparation. For example, the image is an icon representing "Loading".

When the display target components include different types of components due to differences in specification, the information presentation unit 142 may acquire from the storage device 143 a reference component image showing the display target component of the type identified by the target identification unit 141, and display the acquired reference component image on the output device 12. Even when the vehicle included in the captured image is a vehicle that has an exterior shape partly different from that of the corresponding vehicle model, such as a damaged vehicle or a modified vehicle, the information presentation unit 142 may estimate the position of the display target component from the exterior shape of the vehicle excluding a damaged or modified part, and display the reference component image on the output device 12 such that the reference component image is superimposed on the estimated position of the display target component. When an obstacle is present in front of the vehicle included in the captured image, the information presentation unit 142 may estimate the position of the display target component from the exterior shape of the vehicle excluding a part hidden by the obstacle, and display the reference component image on the output device 12 such that the reference component image is superimposed on the estimated position of the display target component. Even when the vehicle has an interior component and/or an exterior component removed therefrom, the information presentation unit 142 may estimate the position of the display target component from the exterior shape of the vehicle excluding the removed interior component and/or exterior component, and display the reference component image on the output device 12 such that the reference component image is superimposed on the estimated position of the display target component.

When no component image can be displayed due to the influence of the environment in the real space and/or the positional relationship with the vehicle, the information presentation unit 142 may display on the output device 12 an instruction image including instructions on conditions related to the environment in the real space and/or the positional relationship with the vehicle such that the component image can be displayed. For example, when the target identification unit 141 cannot identify the display target component from the captured image because the real space is dark, the information presentation unit 142 displays an instruction image including the text "Illuminate the surroundings" on the output device 12. When the target identification unit 141 cannot identify the display target component from the captured image because the distance to the vehicle is too short or long, the information presentation unit 142 displays an instruction image including the text "Move away from the target object" or "Move closer to the target object" on the output device 12. When the target identification unit 141 cannot identify from the captured image the inspection target area input by the user because the inspection target area identified from the captured image is different from the inspection target area input by the user, the information presentation unit 142 displays an instruction image including the text "The inspection area to which the camera is pointed is different from the selected inspection target area. Point the camera to the selected inspection target area" on the output device 12.

After starting to display the component image, the information presentation unit 142 causes the output device 12 to display the component image such that the component image is kept superimposed on the vehicle in response to changes in the position and the posture of the user. The information presentation unit 142 recognizes the position and the posture of the user in the real space including the vehicle, based on vehicle position/posture information and user position/posture information. That is, the information presentation unit 142 recognizes the relative positional relationship between the user and the vehicle (including the direction in which the vehicle exists and the distance to the vehicle) on the basis of the user. The position and the posture of the user are identified by the position and the posture of the terminal 1. The information presentation unit 142 periodically recognizes the relative positional relationship between the user and the vehicle, and changes the position and the orientation of the component displayed on the output device 12 so as to correspond to the recognized positional relationship. This makes it possible to display the component image on the output device 12 such that the component image is superimposed on the vehicle even when the position and the posture of the user change because the user operating the terminal 1 moves closer to or farther from the vehicle, moves around the vehicle, or looks at the vehicle from above or below.

For example, when the display position of the component image on the output device 12 deviates from the position of the corresponding component, the information presentation unit 142 recalculates the display position of the component image based on the vehicle position/posture information and the user position/posture information at that time, and redisplays the component image at the recalculated display position. When the user inputs an instruction to pause, the information presentation unit 142 stops updating the display of the component image based on the vehicle position/posture information and the user position/posture information, and pauses the screen on which the image of the vehicle captured at the time the pause instruction is input and the corresponding component image are displayed.

In the present embodiment, when the user selects an inspection target area before the display of component images, the information presentation unit 142 displays component images included in the selected inspection target area, and hides component images included in areas other than the inspection target area. The present embodiment is not limited to this, and even after component images are displayed, when the user selects an inspection target area, the information presentation unit 142 may display component images included in the selected inspection target area, and hide component images included in areas other than the inspection target area. That is, based on the user's selection of display and non-display of the inspection target area, the information presentation unit 142 changes the display and non-display of the corresponding component images. When major items and minor items are set in the inspection target area, the information presentation unit 142 may change the display and non-display of component images in the inspection target area for each item.

When the user selects a connector from among the connectors connected to the wiring included in the vehicle, the information presentation unit 142 acquires from the storage device 143 a component image of the connector selected by the user, a component image of an associated component that is another component associated with the selected connector, connector information on the selected connector, and connector information on the associated component. In the present embodiment, the user selects a connector the user wants to inspect by touching an identification tag image corresponding to the connector. The information presentation unit 142 generates a selected component image in which the selected connector and the associated component are highlighted based on the acquired component images, and displays the selected component image on the output device 12 such that the selected component image is superimposed on the vehicle. That is, the information presentation unit 142 transmits to the output device 12 the selected component image and a control command to display the selected component image such that the selected component image is superimposed on the vehicle. The component image of the selected connector and the component image of the associated component are displayed on the output device 12 such that the respective component images are superimposed on the selected connector and the associated component included in the captured image. The selected component image is an image which shows the selected connector and the associated component in a color different from the colors of components other than the selected connector and the associated component, for example. In the present embodiment, the output device 12 is described as a non-transmissive display, but is not limited to this. In the case where the output device 12 is a transmissive display, the information presentation unit 142 may display the component images on the output device 12 such that the component images are superimposed on the selected connector and the associated component included in the real space. The information presentation unit 142 may transmit only the selected component image to be displayed such that the selected component image is superimposed on the vehicle to the output device 12 without transmitting a control command.

Here, An example of a selected component image generated by the information presentation unit 142 will be described. For example, the selected component image is an image which shows in different forms a selected connector and an associated connector that is connected to the other end of wiring opposite to one end to which the selected connector is connected. The information presentation unit 142 acquires a component image of the selected connector and a component image of the associated connector from the storage device 143, and generates a selected component image which shows the selected connector and the associated connector in different forms. For example, the information presentation unit 142 generates a selected component image in which different mark images are added to the component image of the selected connector and the component image of the associated connector. The mark image for the selected connector is an icon of a red pin, for example. The mark image for the associated connector is an icon of a pink pin, for example.

The selected component image may also be an image which highlights the selected connector and the wiring connected to each pin of the selected connector. The information presentation unit 142 acquires a component image of the selected connector and a component image of the wiring connected to each pin of the selected connector from the storage device 143, and generates a selected component image which highlights the selected connector and the wiring connected to each pin of the selected connector. For example, the information presentation unit 142 generates a selected component image which shows components including the selected connector and the wiring connected to each pin of the selected connector in a form different from that of components other than these components. The image displayed in a different form is an image displayed in a different color, for example. The information presentation unit 142 displays the selected connector and the wiring connected to each pin of the selected connector in red. The information presentation unit 142 also displays the other connectors in blue and the other wiring in green.

When the user selects a pin from among a plurality of the pins of the selected connector, the information presentation unit 142 may display on the output device 12 a selected component image which highlights the selected connector and the wiring connected to the pin selected by the user. For example, the selected component image is an image which shows the wiring connected to the selected pin and the wiring connected to the pins other than the selected pin among the wiring connected to the selected connector in different forms. These selected component images are examples, are not essential elements of the present invention, and may be provided as appropriate if necessary.

The information presentation unit 142 may generate a selected component image which shows the target wiring which connects the selected connector and the associated connector in a form different from that of the wiring other than the target wiring. For example, the information presentation unit 142 displays the target wiring in red and the wiring other than the target wiring in green. For example, when the user selects a pin number of the selected connector, the information presentation unit 142 generates a selected component image which shows the target wiring from the selected pin to the pin of the associated connector connected to the selected pin in a form different from that of the wiring other than the target wiring. In the present embodiment, when the associated connector is present in the inspection target area, the information presentation unit 142 highlights the target wiring from the selected connector to the associated connector, and when the associated connector is present outside the inspection target area, the information presentation unit 142 highlights the target wiring in the inspection target area. At this time, when the associated connector is present outside the inspection target area, the information presentation unit 142 may display a mark image to be added to the associated connector outside the vehicle, and display a connector information image related to the associated connector.

When an intermediate connector is present, the information presentation unit 142 may generate a selected component image which shows the selected connector and the intermediate connector in different forms. The intermediate connector is a connector different from the selected connector and the associated connector, and is a connector connected to the target wiring connecting the selected connector and the associated connector. That is, the intermediate connector is interposed between the selected connector and the associated connector, and electrically connects the selected connector and the associated connector. For example, in the present embodiment, the information presentation unit 142 generates a selected component image in which different mark images are added to the component image of the selected connector and the component image of the intermediate connector. The information presentation unit 142 may add a mark image different from that of the selected connector to either one of the associated connector and the intermediate connector according to the user's selection.

In the present embodiment, when the user selects a connector, the information presentation unit 142 may display a connector information image including connector information on the selected connector and/or the associated connector on the output device 12. That is, the information presentation unit 142 transmits the connector information image and a control command to display the connector information image to the output device 12. For example, the connector information on the selected connector includes at least any one of the shape, model, pin arrangement, and voltage of the selected connector, and the wiring connected to the selected connector. Information included in the connector information on the selected connector is not limited to these kinds of information. The connector information on the selected connector may include the color of the selected connector, the pin number of each pin of the selected connector, the connector name of the selected connector, the color of a wire connected to each pin of the selected connector, and the signal name and specifications for each pin number of the selected connector, for example. When a plurality of different specifications and options are present for a pin number, all of the plurality of existing specifications and options are displayed. When voltage information on the selected connector is included, the connector information includes the connected connector, the pin number, the condition, and the voltage value. The information presentation unit 142 may transmit only the connector information image to the output device 12 without transmitting a control command.

The connector information on the associated connector includes at least any one of the shape, model, pin arrangement, and voltage of the associated connector, and the wiring connected to the associated connector. Information included in the connector information on the associated connector is not limited to these kinds of information. The connector information on the associated connector may include other information, as with the connector information on the selected connector. In the present embodiment, when the user selects the pin arrangement of the selected connector, the information presentation unit 142 displays a connector information image related to the associated connector connected to the selected pin arrangement. The information presentation unit 142 may highlight the selected pin number.

The information presentation unit 142 may also display a component image in which the selected connector is rotated and shown in response to the user's operation. The information presentation unit 142 may display an enlarged component image of the selected connector, or may display an enlarged image of the selected connector and then display a component image showing the selected connector in its original size. The user may touch the enlarged component image to select the connector. The information presentation unit 142 may select either a connector information image including the pin arrangement on the wiring side connected to the wiring of the selected connector or a connector information image including the pin arrangement on the electronic part side opposite to the wiring side of the selected connector, in response to the user's operation, and transmit the selected connector information image to the output device 12.

When a position other than the display position of the connector information image is selected, the information presentation unit 142 may hide the connector information image and return to the screen before the connector selection. Further, when the user selects an identification tag image of another connector while the connector information image is displayed, the information presentation unit 142 may change the connector information image to be displayed to the connector information image of the other connector. Even when the user selects an identification tag image corresponding to a specific connector, the information presentation unit 142 may continue to display the identification tag image of the other connector.

In the present embodiment, when the user selects a component image showing an electronic part, the information presentation unit 142 may display connectors and fuses included in the electronic part. For example, the information presentation unit 142 obtains information indicating a fuse selected by the user from among the fuses included in the electronic part, and displays a selected component image including information on the selected fuse on the output device 12. The information on the selected fuse includes information on an identification number, an amperage, and a wire color for identifying the selected fuse. The information presentation unit 142 may transmit only the selected component image including the information on the selected fuse to the output device 12 without transmitting a control command.

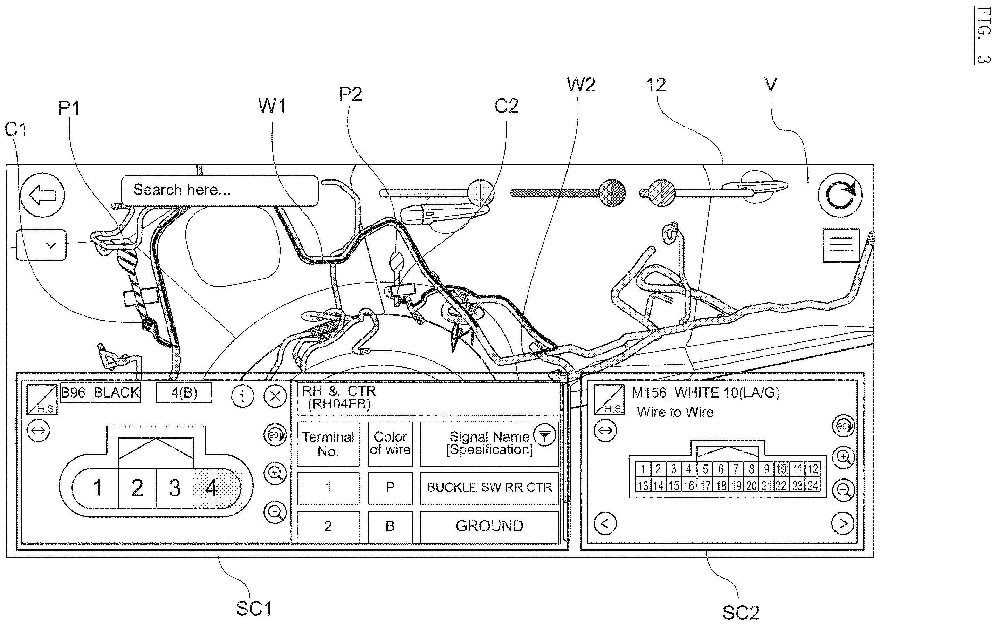

Here, an example of a screen showing a selected component image such that the selected component image is superimposed on the vehicle will be described with reference to FIG. 3. FIG. 3 is a diagram illustrating an example of a screen that is displayed on the output device 12 when the user selects a component. In the following description, the output device 12 will be described as a display. As illustrated in FIG. 3, the information processing device 14 displays on a display (equivalent to the output device 12) a component image C1 shoeing the selected connector, a mark image P1 for the selected connector, a component image C2 showing the associated connector, a mark image P2 for the associated connector, a component image W1 of the wiring connected to a selected pin of the selected connector, and a component image W2 of the wiring other than the wiring connected to the selected pin such that these images are superimposed on a captured image of the vehicle V. Also, displayed on the display is a screen in which a connector information image SC1 of the selected connector and a connector information image SC2 of the associated connector are superimposed on the captured image.

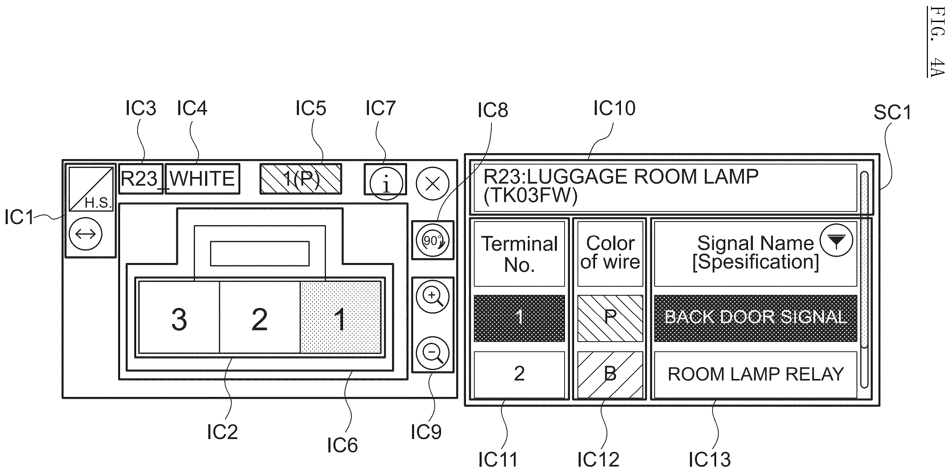

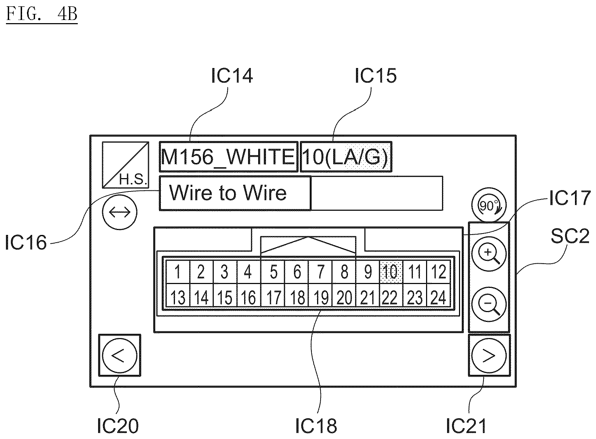

Next, an example of the connector information image of the selected connector will be described with reference to FIG. 4A. FIG. 4A is a diagram illustrating an example of the connector information image of the selected connector in the present embodiment. That is, FIG. 4 illustrates an example of the connector information image SC1 of the selected connector in FIG. 3. The connector information image SC1 of the selected connector includes an image IC1 showing a switching function for switching the display of the pin arrangement of the selected connector between the wiring side and the electronic part side, an image IC2 showing the pin arrangement of the selected connector, an image IC3 showing the connector number of the selected connector, an image IC4 showing the connector color of the selected connector, an image IC5 showing the pin number of a selected pin of the selected connector and the color of the wire connected to the pin, an image IC6 showing the shape of the selected connector, an image IC7 showing a switching function for switching between display and non-display of the selected connector, an image IC8 showing a rotation function of the selected connector, and an image IC9 showing an enlargement and reduction function of the selected connector.

The connector information image SC1 of the selected connector also includes an image IC10 showing the connector number, connector name, and connector type of the selected connector, an image IC11 showing the pin number of the selected connector, an image IC12 showing the color of the wire connected to each pin, and an image IC13 showing the signal name corresponding to each pin.

Next, an example of the connector information image of the associated connector will be described with reference to FIG. 4B. FIG. 4B is a diagram illustrating an example of the connector information image of the associated connector in the present embodiment. That is, FIG. 4B illustrates an example of the connector information image SC2 of the associated connector in FIG. 3. The connector information image SC2 of the associated connector includes an image IC14 showing the connector number and connector color of the associated connector, an image IC15 showing the pin number of the associated connector connected to the pin of the selected connector and the color of the connected wire, an image IC16 showing the connector name of the associated connector, an image IC17 showing the connector shape of the associated connector, and an image IC18 showing the pin number and pin arrangement of the associated connector. When an intermediate connector is present, the connector information image SC2 of the associated connector may also include images IC20 and IC21 for selecting a transition to connector information images of the connectors located before and after. For example, when the user selects the image IC20, a connector information image of a connector closer to the selected connector than the currently displayed connector is displayed. When the user selects the image IC21, a connector information image of a connector farther from the selected connector than the currently displayed connector is displayed.

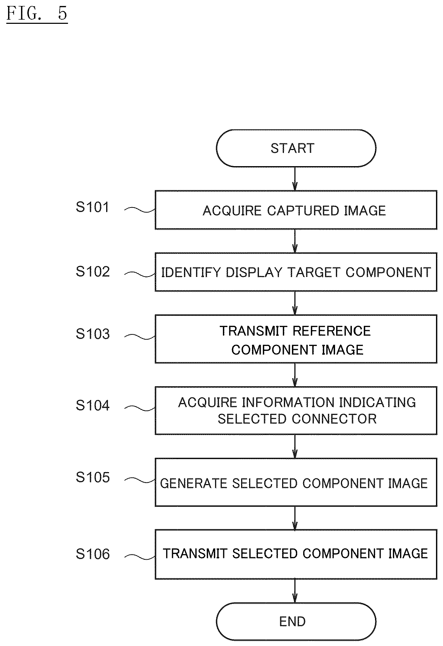

Next, a procedure of an information processing method according to the present embodiment will be described with reference to FIG. 5. FIG. 5 is a flowchart illustrating an example of the procedure of the information processing method according to the present embodiment. In the present embodiment, when the user starts a vehicle inspection application, the controller 140 starts a control flow from step S101.

In step S101, the controller 140 acquires from the detection device 13 an image captured by the camera of the detection device 13. In step S102, the controller 140 identifies a display target component included in the captured image based on the captured image acquired in step S101. For example, the controller 140 recognizes the inspection target area selected by the user, and identifies a component included in the inspection target area as a display target component. In step S103, the controller 140 transmits to the output device 12 a reference component image corresponding to the display target component to be displayed such that the reference component image is superimposed on the vehicle.

In step S104, the controller 140 acquires information indicating the connector selected by the user. For example, when the user selects a connector via the input device 11, the controller 140 acquires information indicating the selected connector from the input device 11. In step S105, the controller 140 generates a selected component image which highlights the selected connector and another component associated with the selected connector. In step S106, the controller 140 transmits to the output device 12 the selected component image to be displayed such that the selected component image is superimposed on the vehicle. In the present embodiment, the controller 140 may transmit a control command to display the reference component image and the selected component image. In the present embodiment, after the display of the reference component image, the user refers to the reference component image and selects a component the user wants to inspect and the like. However, the present invention is not limited to this. For example, after display of a captured image of the vehicle on the output device 12 without display of the reference component image, the user may refer to the vehicle included in the captured image and select a component the user wants to inspect and the like.

As described above, in the information processing device and the information processing method according to the present embodiment, the controller for transmitting information to the output device for outputting received information acquires information indicating the selected connector selected by the user from among the connectors connected to the wiring included in the target object, generates the selected component image which highlights the selected connector and another component associated with the selected connector, and transmits to the output device the selected component image to be displayed such that the selected component image is superimposed on the target object. This allows improving the efficiency of work such as inspection of connectors.

In the information processing device and the information processing method according to the present embodiment, the controller generates the selected component image which shows in different forms the selected connector and the associated connector that is connected to the other end of the wiring opposite to one end to which the selected connector is connected. This allows the user to efficiently check the selected connector and the other connector connected to the selected connector via the wiring.

In the information processing device and the information processing method according to the present embodiment, the controller generates the selected component image which shows the selected connector and the wiring which is connected to each pin of the selected connector in different forms. This allows the user to efficiently check the selected connector and the wiring connected to the pin of the selected connector.

In the information processing device and the information processing method according to the present embodiment, the controller generates the selected component image which shows the target wiring connecting the selected connector and the associated connector, in a form different from that of the wiring other than the target wiring. This allows the user to efficiently check the wiring from the selected connector to the connector associated with the selected connector.

In the information processing device and the information processing method according to the present embodiment, when the intermediate connector that is different from the selected connector and the associated connector is connected to the target wiring which connects the selected connector and the associated connector, the controller generates the selected component image which shows the selected connector and the intermediate connector in different forms. This allows the user to efficiently check the connector between the selected connector and the connector associated with the selected connector.

In the information processing device and the information processing method according to the present embodiment, the controller transmits to the output device the connector information image which includes the connector information on the selected connector and/or the associated connector, the connector information on the selected connector includes at least any one of the shape, the model, the pin arrangement, and the voltage of the selected connector, and the wiring connected to the selected connector, and the connector information on the associated connector includes at least any one of the shape, the model, the pin arrangement, and the voltage of the associated connector, and the wiring connected to the associated connector. This allows the user to efficiently check detailed information on the selected connector and/or the connector associated with the selected connector.

In the information processing device and the information processing method according to the present embodiment, the controller acquires the wiring information on the wiring, transmits to the output device the reference component image which shows the wiring and is to be displayed such that the reference component image is superimposed on the target object, based on the wiring information, and when the user performs an operation to set the highlighting degree of the reference component image showing the wiring, changes the highlighting degree of the reference component image showing the wiring other than the target wiring connecting the selected connector and the associated connector to the set highlighting degree. This allows the user to change the highlighting degree of the other wiring while the wiring between the selected connector and the connector associated with the selected connector is kept highlighted.

In the information processing device and the information processing method according to the present embodiment, the controller switches between the connector information image including the pin arrangement on the wiring side connected to the wiring of the selected connector and the connector information image including the pin arrangement on the electronic part side opposite to the wiring side of the selected connector, and displays them on the output device, in response to the user's operation. This allows the user to switch and check the pin arrangement of the connector.

In the information processing device and the information processing method according to the present embodiment, the controller acquires the component information on the component having the fuse among the components included in the target object, displays the reference component image showing the component on the output device such that the reference component image showing the component is superimposed on the target object, based on the component information, acquires the information indicating the fuse selected by the user among the fuses, and displays the selected component image including the information on the selected fuse on the output device. This allows the user to efficiently check the fuse included in the selected component.

In the information processing device and the information processing method according to the present embodiment, the controller displays the selected component image on the output device such that the selected component image is superimposed on the captured image of the target object or the real space including the target object. This allows the user to visually recognize the extended space including the vehicle with the selected component image being superimposed thereon through the output device.

### <<Second Embodiment>>

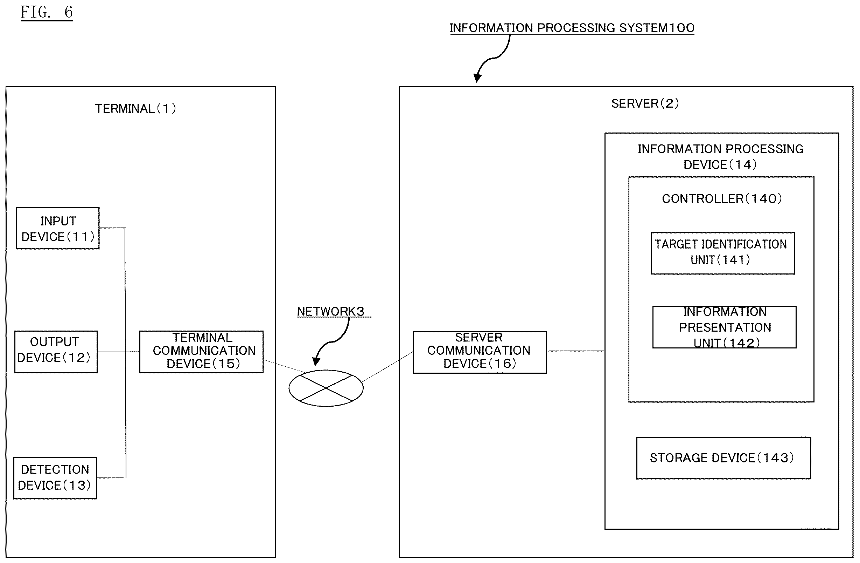

In the first embodiment, the information processing device has been described as being included in the terminal, but is not limited to this, and the information processing device may be included in a server located away from the terminal. An example in which the information processing device is included in the server will be described below. FIG. 6 is a configuration diagram illustrating an example of an information processing system including an information processing device according to a second embodiment of the present invention. As illustrated in FIG. 6, an information processing system 100 includes a terminal 1, a server 2, and a network 3. The second embodiment differs from the first embodiment in that the information processing system 100 includes the server 2 equipped with an information processing device 14, and information is transmitted and received between the terminal 1 and the server 2 through the network 3. That is, in the first embodiment, in the terminal 1, the input device 11, the output device 12, and the detection device 13 transmit and receive information directly to and from the information processing device 14. In the second embodiment, an input device 11, an output device 12, and a detection device 13 transmit and receive information to and from the information processing device 14 via a terminal communication device 15 and a server communication device 16. The other configurations are the same as those of the first embodiment described above. Hereinafter, the description of the same configurations and control processes as those of the first embodiment will be omitted, and the description of the first embodiment will be applied to the omitted description as appropriate.

The terminal 1 includes the terminal communication device 15. The terminal communication device 15 is a device that can communicate with the server communication device 16 via the network 3, and exchanges information with the server communication device 16. The network 3 refers to an electric communication line network, such as the Internet or a LAN, and is not particularly limited as long as it allows an exchange of information between the terminal communication device 15 and the server communication device 16, and a publicly known network can be used. The terminal communication device 15 transmits to the server communication device 16 information input to the input device 11 and information detected by the detection device 13, for example. The information input to the input device 11 includes information indicating a selected connector. The terminal communication device 15 also receives a component image from the server communication device 16, for example. The component image includes a reference component image and a selected component image. The component image received by the terminal communication device 15 is transmitted to the output device 12. Upon receiving the component image, the output device 12 displays the component image such that the component image is superimposed on the vehicle.

The server 2 includes the server communication device 16. The server communication device 16 is a device that can communicate with the terminal communication device 15 via the network 3, and exchanges information with the terminal communication device 15. The server communication device 16 receives from the terminal communication device 15 information input to the input device 11 and information detected by the detection device 13, for example. The server communication device 16 also transmits a component image generated by the information processing device 14 to the terminal communication device 15, for example.

A controller 140 acquires information input to the input device 11 via the server communication device 16. The acquired information includes information indicating a selected connector, for example. The controller 140 transmits a component image to the output device 12. For example, the controller 140 generates a selected component image based on the acquired information indicating the selected connector, and transmits the selected component image to the output device 12 via the server communication device 16 and the terminal communication device 15. At this time, the controller 140 may also transmit the selected component image and a control command to display the selected component image to the output device 12.

As described above, the terminal according to the present embodiment inputs the information indicating the connector selected by the user among the connectors connected to the wiring included in the target object, transmits the information indicating the selected connector to the information processing device that generates the selected component image based on the information indicating the selected connector, receives the selected component image from the information processing device, and displays the selected component image such that the selected component image is superimposed on the target object, and the selected component image is an image which highlights the selected connector and another component associated with the selected connector. This allows improving the efficiency of work such as inspection of a connector.

Note that the above-described embodiments have been described to facilitate understanding of the present invention, and have not been described to limit the present invention. Therefore, the elements disclosed in the above embodiments are intended to include all design changes and equivalents that fall within the technical scope of the present invention. In addition, the components in the above-described embodiments may be combined as appropriate if necessary, and the combinations of the components are not particularly limited.

### Description of Reference Numerals

- 1: Terminal
- 11: Input device
- 12: Output device
- 13: Detection device
- 14: Information processing device
- 140: Controller
- 141: Target identification unit
- 142: Information presentation unit
- 143: Storage device

## Claims

1. An information processing device comprising
a controller for transmitting information to an output device for outputting received information, wherein
the controller:
acquires information indicating a selected connector selected by a user from among connectors connected to wiring included in an target object;
generates a selected component image which highlights the selected connector and another component associated with the selected connector; and
transmits to the output device the selected component image to be displayed such that the selected component image is superimposed on the target object.

2. The information processing device according to claim 1, wherein
the controller generates the selected component image which shows in different forms the selected connector and an associated connector which is connected to the other end of the wiring opposite to one end to which the selected connector is connected.

3. The information processing device according to claim 1 or 2, wherein
the controller generates the selected component image which highlights the selected connector and wiring which is connected to each pin of the selected connector.

4. The information processing device according to claim 2, wherein
the controller generates the selected component image which shows target wiring which connects the selected connector and the associated connector, in a form different from that of the wiring other than the target wiring.

5. The information processing device according to claim 2 or 4, wherein
when an intermediate connector that is different from the selected connector and the associated connector and is connected to target wiring which connects the selected connector and the associated connector is present, the controller generates the selected component image which shows the selected connector and the intermediate connector in different forms.

6. The information processing device according to any one of claims 2, 4, and 5, wherein
the controller transmits to the output device a connector information image which includes connector information on the selected connector and/or the associated connector,
the connector information on the selected connector includes at least any one of a shape, a model, a pin arrangement, and a voltage of the selected connector, and the wiring connected to the selected connector, and
the connector information on the associated connector includes at least any one of a shape, a model, a pin arrangement, and a voltage of the associated connector, and the wiring connected to the associated connector.

7. The information processing device according to any one of claims 2 and 4 to 6, wherein
the controller:
acquires wiring information on the wiring;
transmits to the output device a reference component image which shows the wiring and is to be displayed such that the reference component image is superimposed on the target object, based on the wiring information; and
when the user performs an operation to set a highlighting degree of the reference component image showing the wiring, changes the highlighting degree of the reference component image showing the wiring other than target wiring connecting the selected connector and the associated connector to the set highlighting degree.

8. The information processing device according to any one of claims 1 to 7, wherein
the controller:
selects, in response to an operation by the user, any one of a connector information image including a pin arrangement on a wiring side connected to the wiring of the selected connector and a connector information image including a pin arrangement on an electronic part side opposite to the wiring side of the selected connector; and
transmits the selected connector information image to the output device.

9. The information processing device according to any one of claims 1 to 8, wherein
the controller:
acquires component information on a component having a fuse among components included in the target object;
transmits to the output device a reference component image which shows the component and is to be displayed such that the reference component image is superimposed on the target object, based on the component information;
acquires information indicating a selected fuse selected by the user from among the fuses; and
transmits to the output device the selected component image including the information on the selected fuse.

10. The information processing device according to any one of claims 1 to 9, wherein
the controller transmits to the output device a captured image of the target object or the selected component image to be displayed such that the selected component image is superimposed on a real space including the target object.

11. A terminal comprising:
an input device which inputs information;
a communication device which is capable of communicating with an information processing device; and
an output device which outputs information, wherein
the input device inputs information indicating a selected connector selected by a user from among connectors connected to wiring included in an target object,
the communication device:
transmits the information indicating the selected connector to the information processing device which generates a selected component image based on the information indicating the selected connector; and
receives the selected component image from the information processing device,
the output device displays the selected component image such that the selected component image is superimposed on the target object, and
the selected component image is an image which highlights the selected connector and another component associated with the selected connector.

12. An information processing method executed by a controller for transmitting information to an output device for outputting received information, wherein
the controller:
acquires information indicating a selected connector selected by a user from among connectors connected to wiring included in an target object;
generates a selected component image which highlights the selected connector and another component associated with the selected connector; and
transmits to the output device the selected component image to be displayed such that the selected component image is superimposed on the target object.
